Europäisches Patentamt

(19) European Patent Office

Office européen des brevets

(11) Numéro de publication : **0 097 660**
**B1**

(12) FASCICULE DE BREVET EUROPÉEN

(45) Date de publication du fascicule du brevet :
28.08.85

(21) Numéro de dépôt : **83900043.7**

(22) Date de dépôt : **17.12.82**

(86) Numéro de dépôt international :
**PCT/FR 82/00215**

(87) Numéro de publication internationale :
**WO/8302223 (07.07.83 Gazette 83/16)**

(51) Int. Cl.⁴ : **A 61 C 11/00**

(54) ARTICULATEUR POUR L'ART DENTAIRE.

(30) Priorité : **21.12.81 FR 8124453**

(43) Date de publication de la demande :
**11.01.84 Bulletin 84/02**

(45) Mention de la délivrance du brevet : ·
**28.08.85 Bulletin 85/35**

(84) Etats contractants désignés :
**BE CH DE GB LI LU NL SE**

(56) Documents cités :
**DE-A- 1 791 187**
**FR-A- 1 165 823**
**US-A- 1 711 019**

(73) Titulaire : **FABRICATIONS AUTOMATIQUES
GERBELOT**
**647, chemin de l'Epinette**
**F-74300 Cluses (FR)**

(72) Inventeur : **GERBELOT-BARRILLON, Pierre**
**683, chemin de l'Epinette**
**F-74300 Cluses (FR)**

(74) Mandataire : **de Beaumont, Michel**
**Cabinet Poncet 7, chemin de Tillier**
**F-74000 Annecy (FR)**

Jouve, 18, rue St-Denis, 75001 Paris, France

## Description

La présente invention concerne les articulateurs pour l'art dentaire, utilisés pour la réalisation de travaux d'analyses occlusales et de prothèses dentaires.

Ces appareils permettent, en servant de support à des moulages de mâchoires inférieures et supérieures, de reproduire les mouvements mandibulaires.

Les articulateurs habituellement utilisés comprennent une platine inférieure dont la partie antérieure supporte un plateau incisif, et dont la partie postérieure comprend des branches verticales supportant deux boules condyliennes formant rotules sur lesquelles s'articule un membre supérieur. Le membre supérieur comporte un moyeu postérieur muni de logements appropriés pour enfermer les boules condyliennes et former articulation. Une platine supérieure, solidaire du moyeu postérieur, reçoit dans sa partie antérieure une tige incisive venant en appui sur le plateau incisif pour positionner le membre supérieur par rapport à la platine inférieure.

Pour reproduire les mouvements de la mâchoire, les logements du moyeu postérieur sont habituellement limités par une rampe de guidage supérieure plane inclinée vers l'avant d'un angle reproduisant la pente condylienne ; une rampe latérale extérieure plane, ou aile de BENNETT, perpendiculaire à la rampe supérieure plane et ouverte vers l'avant d'un angle reproduisant l'angle de BENNETT, limite le mouvement de la boule condylienne vers l'extérieur ; une paroi postérieure limite les mouvements de la boule condylienne vers l'arrière tout en permettant les mouvements transversaux. Les moulages de mâchoires inférieures et supérieures sont adaptés sur le dispositif au moyen de plaques de montage se fixant sur la partie centrale de la platine inférieure et de la platine supérieure.

Le brevet US 1 711 019 décrit un dispositif dans lequel les boules condyliennes sont solidaires du moyeu et de la platine supérieure. Les boules sont insérées dans des logements de section cylindrique sans ailes de BENNETT. Des vis longitudinales d'ajustage limitent la course des boules dans les logements et des ressorts rappellent le moyeu vers l'arrière.

Dans le brevet FR 1 165 823, les logements du moyeu dans lesquels s'engagent les boules condyliennes, sont cylindriques sans ailes de BENNETT, et limités en outre par des butées antérieures sollicitées vers l'arrière par des ressorts, sans possibilité de blocage. Les mouvements dits de BENNETT ne sont pas reproduits dans ce dispositif, et les butées se déplacent parallèlement aux parois latérales de guidage.

Certains articulateurs réalisés jusqu'à ce jour, par exemple le dispositif décrit dans le brevet DE 1 791 187, permettent de régler l'inclinaison des rampes et des ailes de BENNETT pour reproduire fidèlement les mouvements de la mâchoire d'un patient. De telles caractéristiques conduisent à la réalisation d'articulateurs relativement complexes et onéreux. Cependant, des statistiques ont montré qu'en choisissant une pente condylienne préréglée en relation avec un angle de BENNETT préréglé dans des valeurs définies, on peut réaliser un articulateur remplissant parfaitement sa fonction dans quatre vingt pour cent des cas traités.

En outre, dans les articulateurs réalisés jusqu'à ce jour, le membre supérieur comprenant le moyeu et la platine supérieure ne peut pas être adapté de façon rapide et efficace sur le membre inférieur ; cette adaptation nécessite la manœuvre de leviers et autres accessoires pour le verrouillage et le déverrouillage de l'articulation.

En outre, l'utilisation des articulateurs par le praticien conduit, pour certains travaux, à bloquer la mâchoire en rotation pure, c'est-à-dire à éviter les mouvements transversaux. Les articulateurs connus jusqu'à ce jour ne permettent pas la réalisation d'un tel blocage de façon simple.

Un objet de la présente invention est de proposer un articulateur dans lequel le membre supérieur est embrochable et débrochable sans manipulation de levier ou autre accessoire. L'embrochage et le débrochage s'effectuent par simple pression exercée sur le membre supérieur par l'utilisateur, le dispositif assurant cependant un maintien efficace du membre supérieur une fois enclenché dans l'articulation, de sorte que les mouvements de la mâchoire sont reproduits avec une grande fiabilité.

Un autre objet de l'invention est de proposer un articulateur permettant le blocage de l'articulation pour la reproduction d'une rotation pure du membre supérieur. En effet, pour la réalisation de certaines prothèses, le mouvement de rotation pure doit être suffisamment précis et fiable, de sorte que l'articulation doit être alors indébrochable.

Un autre objet de l'invention est de réaliser un articulateur présentant le rappel automatique en position centrée du membre supérieur dans le cas d'un mouvement de latéralité. C'est-à-dire, lorsque le praticien, agissant sur la tige incisive de guidage, produit un mouvement transversal du membre supérieur, des moyens de rappel ramènent automatiquement le membre supérieur en position centrée, cette position étant reproduite avec une grande précision.

Selon un autre objet, l'articulateur de la présente invention présente toutefois la possibilité de réaliser des mouvements libres de l'articulation sur les guidances, c'est-à-dire sur la pente condylienne et l'aile de BENNETT, en supprimant l'action des moyens de rappel en position centrée.

Selon un autre objet, l'articulateur comporte des moyens pour programmer un mouvement de propulsion pure ou de latéro-propulsion tout en permettant un mouvement de rotation pure simultanée : dans les mouvements dits de propulsion pure, le praticien imprime au membre supérieur un mouvement de translation antéro-postérieur, ce mouvement pouvant être combiné avec un mouvement transversal pour la réalisation d'un mouvement de latéro-propulsion. Lors de la réalisation des prothèses, le praticien est en outre amené à faire subir au membre supérieur des rotations pures à la suite de ce mouvement de propulsion, la position de l'axe de rotation pure devant être fixe et repérée avec précision. L'articulateur de la présente invention permet le maintien en une position précise quelconque de l'axe de rotation du membre supérieur et le repérage de cette position.

Selon un autre objet, l'invention permet la réalisation d'articulateurs présentant ces nombreuses possibilités tout en étant d'un coût de production très bas. En effet, le nombre de pièces mécaniques nécessaires pour la réalisation de l'articulateur est relativement limité, et les parties demandant une précision de réalisation importante sont peu nombreuses.

Selon un autre objet de l'invention, l'articulateur présente la possibilité d'un renversement entier du dispositif pour une utilisation sans dessus dessous, tout en assurant la sécurité de fonctionnement, la précision des mouvements et en permettant la manœuvre des boutons de réglage.

Selon un autre objet de l'invention, l'articulateur permet la libération totale de la zone antérieure du dispositif pour la réalisation de travaux concernant la zone incisive de la mâchoire. En effet, dans les articulateurs de l'art antérieur, la tige butée incisive, assurant le positionnement du membre supérieur par rapport au membre inférieur, est disposée à l'avant du dispositif de sorte que les travaux dans la zone incisive doivent être effectués en passant de part et d'autre de cette tige verticale. Dans la présente invention, cette tige peut être supprimée.

Pour réaliser ces objets ainsi que d'autres, la présente invention prévoit, selon l'une de ses caractéristiques, que les logements dans lesquels viennent se loger les boules condyliennes sont limités par une paroi supérieure, des ailes de BENNETT, et vers l'avant par une butée antérieure, mobile en translation selon un mouvement antéro-postérieur parallèle à la rampe de guidage supérieure entre une position postérieure dans laquelle la butée maintient la boule condylienne contre la paroi postérieure et une position antérieure dans laquelle la boule condylienne peut s'avancer suffisamment pour reproduire les mouvements de la mâchoire ; le mouvement de la butée s'effectue ainsi selon une direction indépendante de l'inclinaison des parois latérales ou ailes de BENNETT, perpendiculairement à l'axe du moyeu ; la butée est en outre sollicitée vers l'arrière par des moyens élastiques et est bloquable en position quelconque par des moyens de blocage. La butée antérieure vient donc repousser les boules condyliennes vers l'arrière du logement, produisant notamment le rappel en position centrée lors d'un mouvement de latéralité. En outre, les moyens de blocage de la butée permettent d'une part de bloquer la butée en position postérieure pour forcer les boules condyliennes contre la paroi postérieure des logements, assurant ainsi la réalisation d'une articulation fixe pour reproduire un mouvement de rotation pure. Les moyens de blocage permettent en outre, en bloquant la butée antérieure en position antérieure, de dégager entièrement les boules condyliennes pour permettre leur mouvement libre dans tout le volume des logements sans réaction des moyens élastiques, les mouvements étant seulement limités par les rampes de guidage supérieures ou pentes condyliennes et les rampes latérales extérieures ou ailes de BENNETT.

La face postérieure de la butée antérieure comporte par exemple une partie supérieure concave pour envelopper partiellement la boule condylienne et assurer son maintien en appui contre la rampe de guidage supérieure ou pente condylienne sans toutefois entraver son mouvement transversal. On évite ainsi le décollement des boules condyliennes de la rampe de guidage supérieure lors d'un mouvement de latéropropulsion imprimé par le praticien par l'action sur la tige incisive. La fiabilité de reproduction des mouvements de la mâchoire est ainsi notablement améliorée.

Selon une autre caractéristique de l'invention, la butée antérieure est solidaire d'une tige de guidage coulissant dans un alésage ménagé dans un épaulement antérieur du moyeu et dans lequel elle peut être bloquée par une vis de blocage.

Selon une autre caractéristique de l'invention, la tige de guidage dépasse vers l'avant hors de l'alésage de l'épaulement antérieur, et comporte des repères annulaires pour mesurer son déplacement. On dispose ainsi des moyens de mesure commodes pour apprécier le déplacement des boules condyliennes dans les logements lors d'un mouvement de la mâchoire. La tige est donc à la fois un moyen de guidage de la butée antérieure, un moyen de blocage en relation avec les vis de blocage, et un moyen de repérage de déplacement.

Selon une autre caractéristique de l'invention, chacun des logements comprend en outre une butée postérieure, mobile en translation selon un mouvement antéro-postérieur parallèle à la rampe de guidage supérieure entre une position postérieure dans laquelle la butée libre libère la boule condylienne et une position antérieure dans laquelle la butée repousse vers l'avant la boule condylienne ; des moyens permettent son blocage dans toute position intermédiaire ; en outre la butée et la boule ont des profils complémentaires pour interdire les mouvements transversaux de la boule condylienne lorsqu'elle est en contact avec la butée postérieure. On réalise ainsi un dispositif permettant de programmer de façon précise et commode un mouvement antéro-postérieur du membre supérieur par déplacement des butées postérieures à l'encontre de la pression exercée par les moyens élastiques sur les butées antérieures. Dans chaque position intermédiaire, les butées postérieures peuvent être bloquées ainsi que les butées antérieures, de sorte que l'on peut réaliser un mouvement de rotation pure du membre supérieur autour d'un axe en position intermédiaire. L'amplitude du mouvement antéro-postérieur ainsi programmé est mesurée aisément au moyen des tiges des butées antérieures mentionnées précédemment. Il est en outre nécessaire de bloquer les mouvements transversaux de la boule lors d'un mouvement de propulsion antéro-postérieur, car les boules ne sont plus maintenues par les ailes de BENNETT lors de ce mouvement.

Selon une autre caractéristique de l'invention, la butée postérieure comporte un pointeau s'engageant dans une gorge annulaire ménagée sur la boule condylienne correspondante dans un plan perpendiculaire à l'axe de rotation du moyeu. Les profils complémentaires de la butée postérieure et de la boule condylienne sont ainsi très simples à réaliser, de façon à produire un articulateur performant et peu onéreux.

Selon une autre caractéristique de l'invention, on peut améliorer le guidage des boules condyliennes en ménagenat sur les ailes de BENNETT une piste de guidage longitudinale dans laquelle s'engage la boule correspondante pour assurer son maintien en appui contre la rampe de guidage supérieure lors d'un mouvement du membre supérieur.

Selon une autre caractéristique de l'invention, la face inférieure du moyeu comporte des gorges longitudinales de même diamètre que les boules condyliennes et débouchant en regard des butées antérieures ; les butées antérieures comportent, sur la partie inférieure de leur face postérieure, des rampes contre lesquelles viennent buter les boules condyliennes, permettant leur introduction en force à l'encontre de la poussée exercée par les moyens élastiques. L'ensemble de ces moyens, associé à la forme enveloppante de la butée antérieure, permet un embrochage très facile du membre supérieur sur le membre inférieur, le débrochage étant réalisé également très facilement en exerçant une poussée à l'encontre des moyens élastiques pour sortir les boules de leur logement. Les gorges longitudinales facilitent notablement le guidage des boules condyliennes vers leur logement lors de l'adaptation d'un bras supérieur sur un bras inférieur.

Selon une autre caractéristique de l'invention, on adapte sur le membre supérieur et sur le membre inférieur des plaques de montage spéciales : ces plaques sont un peu plus larges que les plaques habituellement utilisées et comprennent en outre deux tiges butées secondaires adaptables sur la plaque de montage supérieure, réglables en longueur, venant en butée contre la plaque de montage inférieure, et bloquables en position par des moyens de blocage les solidarisant à la plaque supérieure. Lorsque les tiges butées secondaires sont montées et bloquées en position, on peut retirer la tige incisive, libérant ainsi l'accès à la zone incisive de la mâchoire pour faciliter le travail du praticien dans cette zone.

Selon une autre caractéristique de l'invention, le moyeu comporte au moins deux pieds dépassant de sa surface supérieure et sur lesquels peut reposer le dispositif une fois retourné tout en libérant les boutons de réglage. On permet ainsi au praticien d'utiliser le dispositif en position renversée tout en assurant les réglages nécessaires à la reproduction fidèle des mouvements de la mâchoire.

D'autres caractéristiques et avantages de la présente invention ressortiront de la description suivant un mode de réalisation particulier, faite en relation avec les figures jointes parmi lesquelles :

la figure 1 représente une vue en perspective d'un articulateur selon la présente invention ;

la figure 2 représente une vue de côté du membre supérieur d'un articulateur selon la présente invention ;

la figure 3 représente une vue de dessous du membre supérieur, selon un plan parallèle à la pente condylienne ;

la figure 4 représente une vue partielle de côté en coupe du membre supérieur selon l'axe I-I de la figure 3 ; et

la figure 5 représente une vue partielle de dessous en coupe du membre supérieur selon l'axe II-II de la figure 2.

Comme le représentent les figures, l'articulateur comprend de façon générale un membre inférieur 1 sur lequel s'articule un membre supérieur 2. Le membre inférieur 1 comprend une platine inférieure 3 dont la partie antérieure supporte un plateau incisif 4 pouvant être du type à orientation réglable. La partie centrale de la platine 3 permet l'adaptation d'une plaque de montage inférieure 5. La partie postérieure de la platine 3 se raccorde à deux branches verticales 6 et 7 dont les zones supérieures supportent chacune une boule condylienne respectivement 8 et 9.

Sur le mode de réalisation représenté sur les figures, les boules condyliennes sont disposées en regard l'une de l'autre et font saillie des faces intérieures des branches verticales 6 et 7.

Sur la partie extérieure de ces branches sont fixés deux axes de pivotement 10 et 11 qui correspondent à l'axe auriculaire et permettent l'adaptation d'un arc facial.

Le membre inférieur peut également recevoir, à la place de la plaque de montage inférieure 5, un plateau support occlusal orienté arbitrairement à dix degrés par rapport au plan de référence de l'articulateur et correspondant approximativement à un plan d'occlusion se rapprochant du plan de CAMPER. Sur ce plateau est également gravé un repère dit incisif qui correspond au triangle de BONWILL.

Le membre supérieur 2 est embrochable sur les boules condyliennes 8 et 9, et comporte pour cela un moyeu 12 solidaire d'une platine supérieure 13. La partie antérieure de la platine supérieure 13 comporte un dispositif de guidage et de blocage 14 comportant un canon d'axe vertical et une vis de blocage 15 transversale. Une tige incisive 16 peut être introduite et bloquée dans le canon pour venir en appui sur le plateau incisif 4 et maintenir en position le membre supérieur.

La partie centrale de la platine supérieure 13 comporte un dispositif de positionnement sur lequel s'adapte une plaque de montage supérieure 17.

Le moyeu 12 comporte, sur sa face supérieure 18, deux pieds de stabilisation 19 et 20, lesquels, en relation avec la tige incisive 16, permettent d'avoir une très bonne stabilité en position renversée du dispositif.

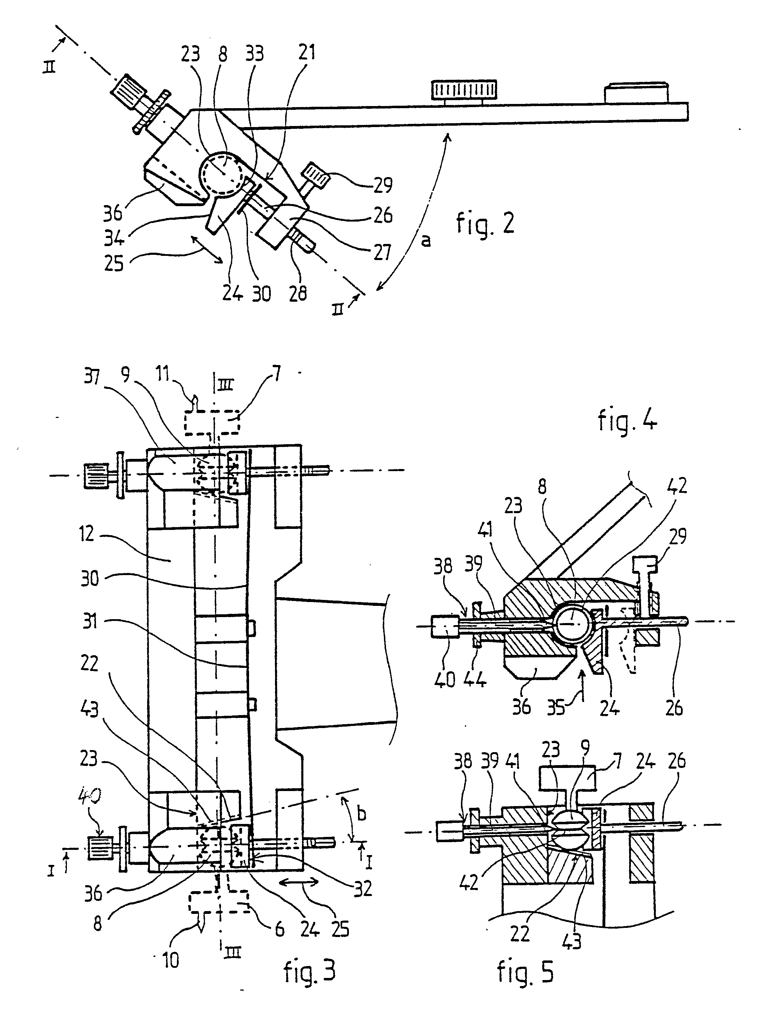

Le moyeu 12 comporte en outre, au voisinage de chacune de ses extrémités, des logements appropriés pour enfermer les boules condyliennes. Comme le représentent les figures 2 à 5, les deux logements du moyeu ont une disposition symétrique par rapport à l'axe médian du dispositif, il est donc suffisant de décrire l'un des deux logements.

Comme le représentent les figures, les logements sont limités par une rampe de guidage supérieure plane 21, inclinée vers l'avant d'un angle a reproduisant la pente condylienne. Une rampe latérale extérieure 22 ou aile de BENNETT, est perpendiculaire à la rampe supérieure 21 et ouverte vers l'avant d'un angle b reproduisant l'angle de BENNETT. Le logement est en outre limité par une paroi postérieure 23 profilée de façon à permettre les mouvements transversaux des boules condyliennes.

Selon la présente invention, les valeurs des angles a et b de pente condylienne et d'angle de BENNETT sont fixes. On choisira de préférence un angle de pente condylienne voisin de quarante degrés et un angle de BENNETT voisin de quinze degrés, de façon à réaliser un dispositif permettant de traiter la plupart des cas rencontrés par le praticien.

Les logements sont en outre limités vers l'avant par une butée antérieure 24, mobile en translation selon un mouvement antéro-postérieur parallèle à la rampe de guidage supérieure 21 comme le représentent les doubles flèches 25. La butée antérieure 24 est mobile entre une première position, représentée par exemple sur la figure 2, dans laquelle elle repousse la boule condylienne 8 contre la paroi postérieure 23 du logement, et une seconde position, représentée en pointillés sur la figure 4, dans laquelle elle libère la boule condylienne pour permettre ses mouvements et notamment son introduction et son retrait du moyeu. Pour permettre son guidage, la butée 24 est solidaire d'une tige de guidage 26 traversant un épaulement antérieur 27 du moyeu et munie, au voisinage de son extrémité libre dépassant à l'extérieur de l'épaulement 27, de repères annulaires 28 permettant d'en mesurer le déplacement. Une vis de blocage transversale 29 permet de bloquer la tige 26 en une position quelconque, assurant le blocage de la butée 24. La butée 24 est sollicitée par un ressort qui la repousse vers l'arrière en direction de la paroi postérieure 23. On pourra par exemple réaliser le ressort à partir d'une lame d'acier 30, maintenue dans le moyeu dans sa portion centrale 31, et comportant au voisinage de ses extrémités une lumière oblongue longitudinale dans laquelle s'insère la tige 26, de sorte que le ressort 30 est en appui contre la face antérieure 32 de la butée 24. On pourra également utiliser des ressorts hélicoïdaux.

La partie postérieure de la butée 24 comporte une première partie supérieure 33 à profil incurvé pour envelopper partiellement la boule condylienne 8 tout en permettant son déplacement libre selon un axe transversal. La butée 24 assure ainsi la poussée de la boule 8 contre la rampe supérieure 21. La face postérieure de la butée 24 comporte en outre une partie inférieure 34 formant rampe d'introduction comme le représentent les figures, de façon qu'une boule condylienne puisse être introduite dans le moyeu par simple pression dans le sens de la flèche 35 représentée sur la figure 4, la butée 24 étant alors repoussée dans la position représentée en pointillés.

Pour faciliter l'introduction des boules condyliennes, on ménage sur la partie inférieure du moyeu des gorges longitudinales 36 et 37 débouchant en regard des butées antérieures et ayant un axe antéro-postérieur sensiblement parallèle à la pente condylienne.

Chaque logement comporte une butée postérieure 38 comprenant une tige de guidage 39 dont une première extrémité est munie d'un bouton de manœuvre 40 et dont l'autre extrémité est conformée en pointeau 41 pour s'engager dans une gorge annulaire 42 ménagée sur la boule condylienne selon un plan perpendiculaire à l'axe de rotation du moyeu III-III. La tige 39 est partiellement filetée pour coopérer avec un taraudage correspondant de l'alésage du moyeu dans lequel elle est insérée, et est mobile, sous l'action du bouton 40, dans un mouvement antéro-postérieur parallèle à la rampe supérieure 21 entre une première position dans laquelle elle libère totalement la boule condylienne, comme le représentent les figures 4 et 5, et une seconde position dans laquelle elle repousse la boule 8 à l'encontre de la butée 24 et du ressort 30 en direction de l'épaulement 27. Un contre écrou 44 permet le blocage de la butée 38 en une position quelconque.

Les ailes de BENNETT telles que l'aile 22 peuvent être avantageusement munies d'une rainure longitudinale formant piste 43 de guidage dans laquelle s'engage la boule condylienne pour assurer son maintien en appui contre la rampe de guidage supérieure. Le chemin de guidage doit être ménagé selon un axe passant par le plan II-II de la figure 2, c'est-à-dire par le centre de la boule condylienne lorsqu'elle est plaquée contre la rampe supérieure 21.

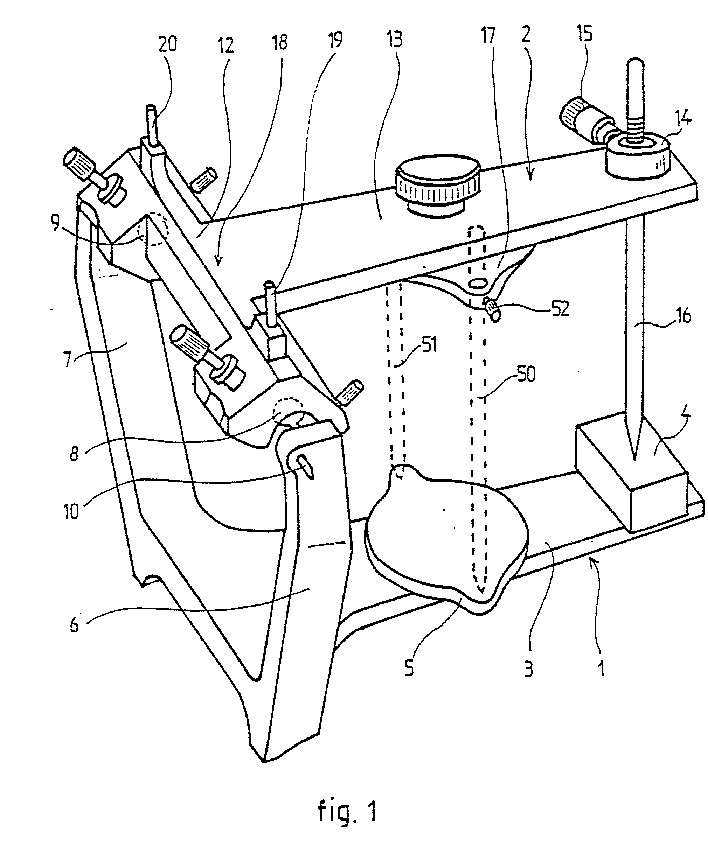

Comme le représente la figure 1, on peut adapter sur l'articulateur de la présente invention des plaques de montage inférieures 5 et supérieures 17 comportant des excroissances latérales pour admettre des tiges supports ou butées secondaires 50 et 51. Les tiges 50 et 51 passent dans des alésages prévus sur la plaque de montage supérieure 17, de part et d'autre de la platine supérieure 13, et viennent en appui contre la plaque de montage inférieure 5 comme le représente la figure. Les tiges peuvent être bloquées et solidarisées à la plaque supérieure 17 au moyen de vis de blocage latérales telles que la vis 52.

Le fonctionnement du dispositif est le suivant : l'embrochage et le débrochage du membre supérieur 2 sur le membre inférieur 1 s'effectue par simple pression de l'utilisateur, les boules condyliennes s'insérant dans les logements comme le représente la flèche 35 de la figure 4. On peut bloquer l'articulation en rotation pure sur la paroi postérieure 23 en retirant au maximum les butées postérieures 38 et en bloquant la butée antérieure 24 au moyen de la vis 29. Lorsque la butée 24 est retirée vers l'avant et bloquée par la vis 29, le mouvement de la boule condylienne dans le logement est libre, limité seulement par l'aile de BENNETT et la rampe de guidage supérieure 21. Le praticien peut alors effectuer des mouvements libres de la mâchoire sans contrainte. Avec ou sans déblocage de la butée antérieure 24, l'action de la butée postérieure 38 permet de repousser les boules condyliennes vers l'avant, parallèlement ou dissymétriquement, selon des mouvements antéro-postérieurs dont l'amplitude peut être repérée par le déplacement de la tige 26. On remarquera que pour une position quelconque de la butée 38 on peut également bloquer la butée antérieure 24 pour réaliser un mouvement de rotation pure autour d'un axe intermédiaire de rotation.

Lors d'un mouvement de latéralité, l'une des boules condyliennes 8 ou 9 est en appui contre la paroi postérieure 23, l'autre boule se déplaçant vers l'avant, guidée contre l'aile de BENNETT correspondante. Le rappel en position intermédiaire centrée, telle que représentée sur la figure 3, est effectuée de façon automatique par le ressort 30 lorsque le praticien relâche la tige 16.

L'utilisation des tiges butées 50 et 51 est la suivante : après le réglage de la tige support 16 incisive, on insère les tiges 50 et 51 pour venir en contact avec la plaque de montage inférieure 5, on bloque ces tiges par les vis 52 et on peut alors retirer la tige 16 pour effectuer les travaux dans la partie antérieure de la mâchoire.

La présente invention n'est pas limitée aux modes de réalisation qui ont été explicitement décrits, mais elle en inclut les diverses variantes et généralisations contenues dans le domaine des revendications ci-après. Ainsi, on a décrit des moyens assurant le blocage transversal des boules condyliennes lors d'un mouvement de propulsion antéro-postérieure, ces moyens comprenant des pointeaux s'engageant dans les gorges des boules. On pourra cependant utiliser tous autres profils complémentaires des boules et des butées postérieures pour empêcher ces mêmes mouvements transversaux tout en permettant les rotations pures et les propulsions antéro-postérieures lorsque les boules sont en contact avec les butées.

## Revendications

1. Appareil articulateur pour l'art dentaire, notamment pour la réalisation de travaux d'analyses occusales et de prothèses dentaires, permettant d'enregistrer et de reproduire les mouvements de la mâchoire, comprenant une platine inférieure (3) dont la partie antérieure supporte un plateau incisif (4), et dont la partie postérieure comprend deux branches verticales (6, 7) supportant des boules condyliennes (8, 9) formant rotules sur lesquelles s'articule un membre supérieur (2) comportant un moyeu postérieur (12) muni de logements appropriés pour enfermer les boules condyliennes, le membre supérieur comportant une platine supérieure (13) solidaire du moyeu postérieur et dont la partie antérieure reçoit une tige incisive (16) venant en appui sur le plateau incisif, les logements du moyeu postérieur étant limités par une rampe de guidage supérieure plane (21) inclinée vers l'avant d'un angle (a) reproduisant la pente condylienne, par une rampe latérale extérieure plane (22) ou aile de BENNETT, perpendiculaire à la rampe de guidage supérieure plane et ouverte vers l'avant d'un angle (b) reproduisant l'angle de BENNETT, par une paroi postérieure (23) permettant les mouvements transversaux des boules condyliennes, et par une butée antérieure (24), mobile en translation selon un mouvement parallèle à la rampe de guidage supérieure plane et blocable en position quelconque, caractérisé en ce que la butée antérieure (24) est mobile selon un mouvement antéro-postérieur dans lequel elle est sollicitée vers l'arrière par des moyens élastiques (30) et en ce que sa force postérieure (33) est conformée pour envelopper partiellement la boule condylienne (8, 9) et assurer son maintien en appui contre la rampe de guidage supérieure plane (21) sans entraver son mouvement transversal.

2. Articulateur selon la revendication 1, caractérisé en ce que la butée antérieure (24) est solidaire d'une tige de guidage (26) coulissant dans un alésage ménagé dans un épaulement antérieur (27) du moyeu postérieur (12) et dans lequel elle peut être bloquée par une vis de blocage (29).

3. Articulateur selon la revendication 2, caractérisé en ce que les moyens élastiques comprennent une lame ressort transversal (30) fixé au centre (31) du moyeu postérieur et en appui sur la face antérieure (32) de la butée antérieure (24), la tige de guidage (26) passant à travers une lumière oblongue transversale ménagée sur la lame ressort.

4. Articulateur selon la revendication 3, caractérisé en ce que la tige (26) dépasse vers l'avant hors de l'alésage de l'épaulement antérieur (27) et comporte des repères annulaires (28) pour mesurer son déplacement.

5. Articulateur selon l'une quelconque des revendications 1 à 4, caractérisé en ce que chaque logement comprend en outre une butée postérieure (38), mobile en translation selon un mouvement antéro-postérieur parallèle à la rampe de guidage supérieure plane (21) entre une position postérieure dans laquelle la butée postérieure libère la boule condylienne (8, 9) et une position antérieure dans laquelle la butée postérieure repousse vers l'avant la boule condylienne, des moyens (42) permettant son blocage dans toute position intermédiaire, et en ce que la butée postérieure et la boule condylienne ont des profils complémentaires pour interdire les mouvements transversaux de la boule condylienne lorsqu'elle est en contact avec la butée postérieure.

6. Articulateur selon la revendication 5, caractérisé en ce que la butée postérieure (38) comporte un pointeau (41) s'engageant dans une gorge annulaire (42) ménagée sur la boule condylienne (8, 9) dans un plan perpendiculaire à l'axe de rotation du moyeu postérieur (12).

7. Articulateur selon l'une quelconque des revendications 1 à 6, caractérisé en ce que les ailes de BENNETT (22) comportent une piste de guidage longitudinale (43) dans laquelle peut s'engager la boule condylienne (8, 9) pour assurer son maintien en appui contre la rampe de guidage supérieure plane (21).

8. Articulateur selon l'une quelconque des revendications 1 à 7, caractérisé en ce que la face inférieure du moyeu postérieur (12) comporte des gorges longitudinales (36, 37) de même diamètre que les boules condyliennes (8, 9) et débouchant en regard des butées antérieures (24), et en ce que les butées antérieures (24) comportent, sur la partie inférieure de leur face postérieure (34), des rampes contre lesquelles viennent buter les boules condyliennes (8, 9) permettant leur introduction en force à l'encontre de la poussée exercée par les moyens élastiques (30).

9. Articulateur selon l'une quelconque des revendications 1 à 8, comprenant une plaque de montage supérieure (17) s'adaptant sur la platine supérieure (13) et une plaque de montage inférieure (5) s'adaptant sur la platine inférieure (3), caractérisé en ce qu'il comprend en outre deux tiges butées secondaires (50, 51) adaptables sur la plaque de montage supérieure (17), réglables en longueur, venant en butée contre la plaque de montage inférieure (5), et bloquables en position par des moyens de blocage (52) les solidarisant à la plaque de montage supérieure.

10. Articulateur selon l'une quelconque des revendications 1 à 9, caractérisé en ce que le moyeu postérieur (12) comporte au moins deux pieds supérieurs (19, 20) sur lesquels peut reposer le dispositif retourné tout en libérant les boutons de réglage.

11. Articulateur selon l'une quelconque des revendications 1 à 10, caractérisé en ce que sur la partie extérieure des branches verticales (6, 7) sont fixés deux axes de pivotement (10, 11) qui correspondent à l'axe auriculaire et permettent l'adaptation d'un arc facial.

**Claims**

1. An articulator apparatus for the dental art, more especially for carrying out occlusal analysis and dental prothesis work, for recording and reproducing the movements of the jaw, comprising a lower plate (3) whose front part supports an incisive plate (4) and whose rear part comprises two vertical legs (6, 7) supporting two condylar balls (8, 9) forming ball joints on which is articulated an upper member (2) comprising a rear hub (12) having appropriate housings for enclosing the condylar balls, the upper member comprising an upper plate (13) integral with the rear hub and whose front part receives an incisive rod (16) bearing on the incisive plate, the housings of the rear hub being limited by an upper flat guide ramp (21) slanted forwardly through an angle (a) reproducing the condylar slope, by an outer flat lateral ramp (22) or BENNETT's wing, perpendicular to the flat upper guide ramp and open forwardly through an angle (b) representing BENNETT's angle, by a rear wall (23) permitting the transverse movements of the condylar balls and by a front stop (24), movable in translation parallel to the flat upper guide ramp and lockable in any position, characterized in that the front stop (24) is mobile following an anteroposterior movement in which is it urged rearwardly by resilient means (30) and in that its rear face (33) is shaped so as to partially envelope the condylar ball (8, 9) and to maintain it applied against the flat upper guide ramp (21) without hindering its transverse movement.

2. Articulator according to claim 1, characterized in that the front stop (24) is integral with a guide rod (26) sliding in a bore formed in a front shoulder (27) of the rear hub (12) and in which it may be locked by a locking screw (29).

3. Articulator according to claim 2, characterized in that the resilient means comprise a transverse blade spring (30) fixed at the center (31) of the rear hub and in abutment against the front face (32) of the front stop (24), the guide rod (26) passing through a transverse oblong aperture formed in the spring blade.

4. Articulator according to claim 3, characterized in that the rod (26) extends forwardly outside the bore in the front shoulder (27) and comprises annular marks (28) for measuring its movement.

5. Articulator according to any one claims 1 to 4, characterized in that each housing further comprises a rear stop (38), movable in translation with an antero-posterior movement parallel to the flat upper guide ramp (21) between a rear position in which the rear stop releases the condylar ball (8, 9) and a front position in which the rear stop pushes the condylar ball forwardly, means, (42) allowing it to be locked in any intermediate position, and in that the rear stop and the condylar ball have complementary profiles for preventing the transverse movements of the condylar ball when it is in contact with the rear stop.

6. Articulator according to claim 5, characterized in that the rear stop (38) comprises a needle (41) engaging in an annular groove (42) formed in the condylar ball (8, 9) in a plane perpendicular to the axis of rotation of the rear hub (12).

7. Articulator according to any one of claims 1 to 6, characterized in that the BENNETT wings (22) comprise a longitudinal guide track (43) in which the condylar ball (8, 9) may be engaged for maintaining it applied against the flat upper guide ramp (21).

8. Articulator according to any one of claims 1 to 7, characterized in that the lower face of the rear hub (12) comrpises longitudinal grooves (36, 37) of the same diameter as the condylar balls (8, 9), and opening opposite the front stops (24), and in that the front stops (24) comprise, on the lower part of their rear face (34), ramps against which the condylar balls (8, 9) come into abutment allowing their forced introduction against the thrust exerted by the resilient means (30).

9. Articulator according to any one of claims 1 to 8, comprising an upper mounting plate (17) fitted onto the upper plate (13) and a lower mounting plate (5) fitting onto the lower plate (3), characterized in that it further comprises two secondary stop rods (50, 51) which may be fitted onto the upper mounting plate (17), adjustable in length, coming into abutment against the lower mounting plate (5), and lockable in position by locking means (52) securing them to the upper mounting plate.

10. Articulator according to any one of claims 1 to 9, characterized in that the the rear hub (12) comprises at least two upper feet (19, 20) on which the overturned device may rest while releasing the adjustment knobs.

11. Articulator according to any one of claims 1 to 10, characterized in that, on the outer part of the vertical legs (6, 7), are fixed two pivot pins (10, 11) which correspond to the auricular axis and allow fitting of a facial arc.

**Patentansprüche**

1. Artikulationsvorrichtung für die Zahnheilkunde, insbesondere für die Ausführung von Zahnreihenschluß-Analysearbeiten und von Zahnprothesen, welche die Aufnahme und das Reproduzieren der Keferbewegungen erlaubt und welche eine untere Platte (3) aufweist, deren vorderer Teil eine Einschnittplatte (4) trägt und deren hinderer Teil zwei senkrechte Arme (6, 7) aufweist, welche zwei Gelenkkuglen (8, 9) tragen, die Gelenkzapfen bilden, an denen ein Oberteil (2) angelenkt ist, welches eine hintere Nabe (12) aufweist, die mit geeigneten Ausnehmungen versehen ist, um die Gelenkkugeln zu umschließen, wobei das Oberteil eine obere Platte (13) aufweist, welche einstückig mit der hinteren Nabe ausgebildet ist und wobei deren hinteres Teil einen einschneidenden Schaft (16) aufnimmt, welcher sich auf der Einschnittplatte abstützt, wobei die Ausnehmungen der hinteren Nabe durch eine obere ebene Führungsschräge (21)

begrenzt sind, welche um einen Winkel (a) nach vorne geneigt ist, welcher die Neigung des Gelenks wiedergibt und zwar durch eine seitliche äußere ebene Schrägung (22) oder einen BENNETT-Flügel, der senkrecht zur oberen ebenen Führungsschrägung ist und nach vorne um einen Winkel (b) geöffnet ist, welcher den BENNETT-Winkel wiedergibt, und zwar durch eine hintere Wand (23), welche die Transversalbewegungen der Gelenkkugeln erlaubt sowie durch einen vorderen Anschlag (24), welcher parallel zur oberen ebenen Führungsschrägung translatorisch beweglich ist und welcher in jeder Position blockierbar ist, dadurch gekennzeichnet, daß der vordere Anschlag (24) beweglich ist, um eine Vor-Rückwärtsbewegung auszuführen, bei der er durch elastische Einrichtugen (30) nach hinten gedrückt wird und daß seine hintere Fläche (33) derart gestaltet ist, daß sie teilweise die Gelenkkugel (8, 9) umschließt und seinen Stützhalt gegen die obere ebene Führungsschrägung (21) sicherstellt, ohne seine Transversalbewegung zu behindern.

2. Artikulationsvorrichtung gemäß Anspruch 1, dadurch gekennzeichnet, daß der vordere Anschlag (24) einstückig mit einem Führungsschaft (26) ausgebildet ist, welcher in einer Bohrung gleitet, die in einem vorderen Vorsprung (27) der hinteren Nabe (12) angeordnet ist und in der er durch eine Halteschraube (29) blockiert werden kann.

3. Artikulationsvorrichtung gemäß Anspruch 2, dadurch gekennzeichnet, daß die elastischen Einrichtungen eine Querfeder (30) aufweisen, welche im Mittelpunkt (31) der hinteren Nabe befestigt ist und sich auf der vorderen Fläche (32) des vorderen Anschlags (24) abstützt, wobei sich der Führungsschaft (26) durch ein querlaufendes Langloch erstreckt, welches im Blatt der Feder angeordnet ist.

4. Artikulationsvorrichtung gemäß Anspruch 3, dadurch gekennzeichnet, daß der Schaft (26) sich nach vorne aus der Bohrung des vorderen Vorsprungs (27) heraus erstreckt und ringförmige Markierungen (28) aufweist, um seine Verschiebung zu messen.

5. Artikulationsvorrichtung gemäß einem der Ansprüche 1 bis 4, dadurch gekennzeichnet, daß jede Ausnehmung des weiteren einen hinteren Anschlag (38) aufweist, welcher translatorisch beweglich ist um eine Vor-Rückwärtsbewegung parallel zur oberen ebenen Führungsschrägung (21) auszuführen, und zwar zwischen einer hinteren Stellung, in welcher der hintere Anschlag die Gelenkkugel (8, 9) freigibt und einer vorderen Stellung, in welcher der hintere Anschlag gegen die Vorderseite der Gelenkkugel drückt, sowie Einrichtungen (42), welche seine Blockierung in jeder Zwischenposition ermöglichen, und daß der hintere Anschlag und die Gelenkkugel ineinander passende Profile aufweisen um die Querbewegung der Gelenkkugel zu verhindern, wenn diese im Kontakt mit dem hinteren Anschlag ist.

6. Artikulationsvorrichtung gemäß Anspruch 5, dadurch gekennzeichnet, daß der hintere Anschlag (38) einen Stift (41) aufweist, der in eine ringförmige Nut (42) eingreift, welche in der Gelenkkugel (8, 9) eingelassen ist und zwar in einer senkrechten Ebene zur Rotationsachse der hinteren Nabe (12).

7. Artikulationsvorrichtung gemäß einem der Ansprüche 1 bis 6, dadurch gekennzeichnet, daß die BENNETT-Flügel (22) eine längliche Führungsspur (43) aufweisen, in welche die Gelenkkugel (8, 9) eingreifen kann, um ihre Abstützung gegen die obere ebene Führungsschrägung (21) zu sichern.

8. Artikulationsvorrichtung gemäß einem der Ansprüche 1 bis 7, dadurch gekennzeichnet, daß die untere Fläche der hinteren Nabe (12) längliche Rillen (36, 37) mit dem gleichen Durchmesser wie die Gelenkkugeln (8, 9) aufweist, die sich in Richtung der vorderen Anschläge (24) öffnen und daß die vorderen Anschläge (24) an dem unteren Teil ihrer hinteren Fläche (34) Schrägungen aufweisen, gegen die die Gelenkkugeln (8, 9) zum Anschlag kommen, wodurch eine Einleitung einer Kraft gegen die Kraft ermöglicht wird, die durch die elastischen Einrichtungen (30) ausgeübt wird.

9. Artikulationsvorrichtung gemäß einem der Ansprüche 1 bis 8 mit einer oberen Montageplatte (17), welche auf der oberen Platte (13) angeordnet ist und einer unteren Montageplatte (5), welche auf der unteren Platte (3) angeordnet ist, dadurch gekennzeichnet, daß des weiteren zwei gelagerte Nebenstifte (50, 51) vorgesehen sind, welche an die obere Montageplatte (17) angaßbar sind, welche in ihrer Länge regulierbar sind, welche in Anschlag mit der unteren Montageplatte (5) kommen und welche in ihrer Stellung durch die Blockiereinrichtungen (52) blockierbar sind, die sie mit der oberen Montageplatte in eine feste Verbindung bringen.

10. Artikulationsvorrichtung gemäß einem der Ansprüche 1 bis 9, dadurch gekennzeichnet, daß die hintere Nabe (12) zumindest zwei obere Stützen (19, 20) aufweits, auf denen die umgedrehte Vorrichtung ruhen kann, wobei die Regulierungsknöpfe völlig frei sind.

11. Artikulationsvorrichtung gemäß einem der Ansprüche 1 bis 10, dadurch gekennzeichnet, daß auf dem äußeren Teil der vertikalen Arme (6, 7) zwei Schwenkachsen (10, 11) angeordnet sind, welche mit der Auricularachse zusammenfallen und welche die Anpassung eines Gesichtsbogens ermöglichen.

fig. 1

fig. 2

fig. 4

fig. 3

fig. 5